# EUROPEAN PATENT SPECIFICATION

(11) **EP 2 407 644 B1**
(45) Date of publication and mention of the grant of the patent: **10.07.2013**
(21) Application number: 11173891.0
(22) Date of filing: 13.07.2011
(51) Int. Cl.: F01D 21/00, F02C 7/36, F02K 3/06

(54) **Geared turbofan**
Turbofantriebwerk mit Getriebe
Turboréacteur à double flux avec système d'engrenages

(30) Priority: 14.07.2010 US 835802
(43) Date of publication of application: 18.01.2012
(73) Proprietor: Hamilton Sundstrand Corporation, Windsor Locks, CT 06096-1010 (US)
(72) Inventor: Lemmers, Jr., Glenn C., Loves Park, IL Illinois 61111 (US)
(74) Representative: Tomlinson, Kerry John

(56) References cited:
- EP-A2- 1 918 564
- US-A- 4 075 910
- US-A- 5 106 352
- US-A1- 2006 137 355
- US-A1- 2006 260 323
- US-A1- 2007 202 983
- US-A1- 2008 279 675

## Description

### BACKGROUND OF THE INVENTION

The present disclosure relates generally to gas turbine engines and more particularly to an apparatus to selectively disengage components of a geared turbofan gas turbine engine in an emergency condition.

Aircraft geared turbofan engines, in which a geared differential connects a low pressure turbine to a fan, are known to provide good fuel economy relative to other types of aircraft gas turbine engines. A differential gives engine designers flexibility to independently optimize the fan and low pressure turbine speeds and efficiency via the differential input to output speed ratios.

US 2006/137355 A1 discloses an electrical generator in a gas turbine engine which is coupled to a clutch assembly through a speed increasing gearset. The gearset increases the rotational speed of the electrical generator when the clutch assembly connects the electrical generator with a low pressure spool shaft during a windmill action of a fan assembly. The speed increasing gear set comprises a plate having a central shaft coupled with the output end of the clutch assembly and includes an inner gear ring extending circumferentially around the periphery thereof. At the other side of the gearset, a small central gear is provided with a central shaft which is coupled with the electrical generator. The central gear gears into the inner gear of the plate through a pair of idle gears rotatably supported by a stationary structure.

EP 1918564 A2 discloses that during engine operation, a fan section for a turbofan engine is driven by a fan drive system that includes a planetary gear system. When the engine is not operating, wind passing over the fan can cause the fan to windmill. If the engine is shut down whilst the aircraft is on the ground, a brake is applied to prevent rotation of the fan. Specifically, a generator connected to the fan drive gear system is shorted to provide a dynamic brake. The generator creates drag on the fan and prevents the fan from rotating. A brake can also be mounted around the rotor shaft to clamp the rotor shaft to prevent rotation.

### SUMMARY OF THE INVENTION

According to a first aspect of the present invention, there is provided a fan drive for an aircraft, according to claim 1, comprising: a gearbox comprising: a planetary gear carrier; a first brake for braking the planetary gear carrier against rotation thereof; planetary gears mounted in the planetary gear carrier; a ring gear mounted to drive or be driven by the planetary gears; a sun gear mounted to drive the planetary gears; a second brake for braking the sun gear against rotation thereof; and a shaft connected to drive the sun gear; and an engine fan coupled to the ring gear and drivable thereby, wherein the first brake is arranged to brake the planetary gear carrier to cause the shaft to drive the sun gear to drive the planetary gears to drive the ring gear to drive the engine fan; and the second brake is arranged to brake the sun gear when the first brake is released so as to cause the engine fan to drive the ring gear to drive the planetary gears to drive the planetary gear carrier.

According to a second aspect of the present invention, there is provided a method, according to claim 5, for selectively disengaging components of a turbofan gas turbine engine in an emergency condition, said method comprising: providing a gearbox comprising: a planetary gear carrier; a first brake for braking the planetary gear carrier against rotation thereof; planetary gears mounted in the planetary gear carrier; a ring gear mounted to drive or be driven by the planetary gears; a sun gear mounted to drive the planetary gears; a second brake for braking the sun gear against rotation thereof; and a shaft connected to drive the sun gear; coupling an engine fan to the ring gear; and when the engine is operating, braking the planetary gear carrier with the first brake to allow the shaft to drive the sun gear to drive the ring gear via the gearbox to drive the engine fan, and when the engine is not operating, releasing the braking of the planetary gear carrier and braking the sun gear with the second brake to allow the engine fan to drive the ring gear to drive the planetary gear carrier.

These and other features of the present invention can be best understood from the following specification and drawings, the following of which is a brief description.

### BRIEF DESCRIPTION OF THE DRAWINGS

Figure 1 includes a diagrammatic view of a low pressure turbine attaching to an epicyclic differential.
Figure 2 is a perspective view of the epicyclic differential of Figure 1.
Figure 3 is a top view of the gear train of Figure 1.

### DETAILED DESCRIPTION OF THE PREFERRED EMBODIMENT

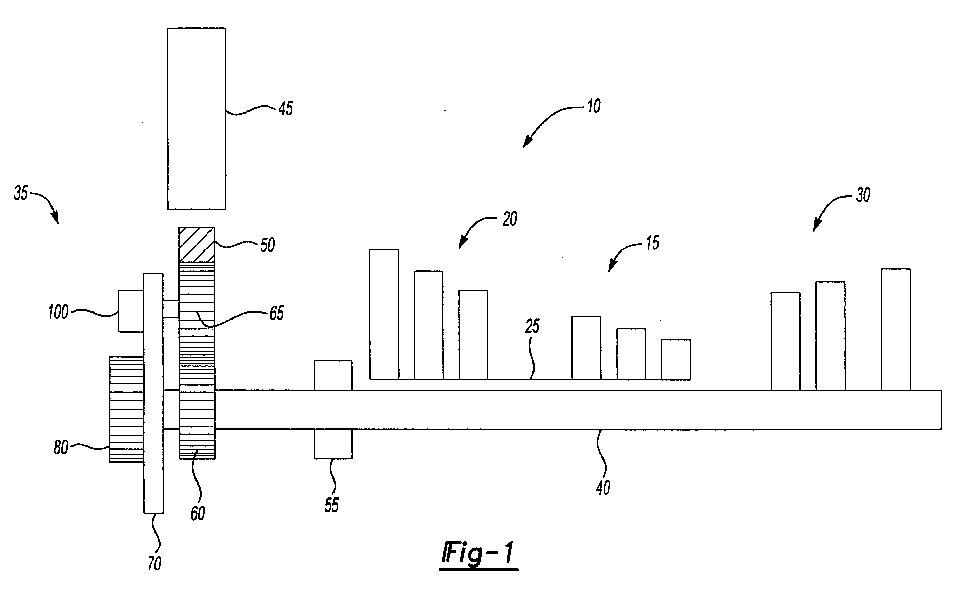

Referring now to Figure 1, a diagrammatic view of a gas turbine engine 10 is shown. A high pressure turbine section 15 drives compressor section 20 via first shaft 25. A low pressure turbine section 30, similarly, drives (e.g., provides rotative input to) a gearbox 35 via shaft 40. The gearbox 35 drives fan 45 via ring gear 50 as is known in the art to power an aircraft (not shown). A shaft brake 55 is attached to the shaft 40.

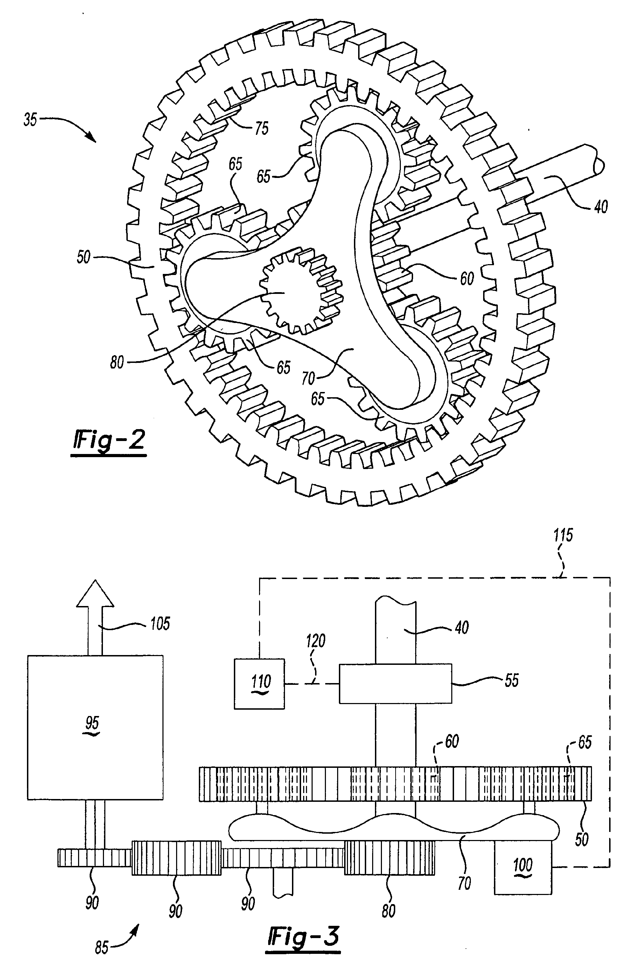

Referring now to Figures 1 and 2, the gearbox 35 is shown. The gearbox 35, which may be epicyclic, has rotative components including an input sun gear 60 mounted for rotation with the shaft 40, a plurality of planetary gears 65 mounted in a carrier 70, and an output ring gear 50 having teeth 75 that interact with the planetary gears 65. A power gear 80 is attached to the carrier 70 for rotation therewith. The gearbox 35 allows the fan 45 to rotate at different speeds than the speed of rotation of shaft 40 to optimize specific fuel consumption of the gas turbine engine 10.

Referring now to Figure 3, a gear train 85 is shown. The gear train 85 is driven by power gear 80 via gears 90 to provide rotative power to a power component 95 such as an electric generator, a hydraulic pump or the like, or other power or drive mechanisms that may be used in an aircraft and are contemplated for use herein. The power component 95 provides power 105, usually in the form of electricity or pumped fluid for use in the aircraft (now shown). A carrier brake 100, which may be a solenoid or other similar device to hold the carrier 70 against rotation, abuts the carrier 70. The power component 95 is designed to be used if the gas turbine engine 10 is not operating and powering a separate power source (not shown).

During normal operation, a controller 110 sends a signal via line 115 to activate the carrier brake 100 and the carrier is therefore grounded or held against rotation. Shaft 40 rotates the sun gear 60 that rotates planetary gears 65 that rotate ring gear 50 which, in turn, rotates fan 45. In this mode with the carrier 70 grounded (i.e., "braked"), the power component 95 is also grounded (i.e. producing no power) and machine stresses and wear on the power component 95 are minimized.

During an emergency, when an aircraft main engine(s) and/or an auxiliary power unit(s) may be inoperable, the failed engine(s) fan 45 may windmill, or rotate due to the forward velocity of the aircraft (not shown). A significant amount of power could be drawn from the fan 45 in this scenario to drive the power component 95 such as an emergency generator and/or hydraulic pump.

In such an emergency, the controller 110 sends a signal via line 115 to disengage the carrier brake 100 to allow the carrier to rotate and a signal via line 120 to engage the shaft brake 55 to stop the shaft 40 and sun gear 60 from rotation. In other words the sun gear 60 is grounded thereby allowing the rotating fan 45 to rotate the ring gear 50, which rotates the planetary gears 65 about the stationary sun gear 60 to rotate the carrier 70 and the power gear 80. The power gear 80, in turn rotates the gears 90 to power the power component 95 to provide power 105 to the aircraft (not shown).

By braking the sun gear/ engine shaft during an emergency parasitic losses are reduced; i.e. power can thus be extracted from the power component. One should also note that if the gas turbine engine 10 is inoperable, its mass and parasitic losses make the shaft 40 difficult to turn thereby providing a braking force on the sun gear reducing the need for a shaft brake 55. In other words, the mass and parasitic losses of the engine essentially provides a grounding force against rotation of the sun gear 60 thereby allowing a rotative force provided by fan 45 to power the power component 95 even if there is some rotation of the shaft 40.

Grounding or ungrounding of the epicyclic differential members, by a carrier brake 100 and/or the shaft brake 55, could be accommodated via any number of clutching methods such as, for example band brakes, cone brakes, face clutches, etc.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure is determined by the following claims.

## Claims

1. A fan drive for an aircraft, comprising:
a gearbox (35) comprising:
a planetary gear carrier (70);
a first brake (100) for braking the planetary gear carrier against rotation thereof;
planetary gears (65) mounted in the planetary gear carrier;
a ring gear (50) mounted to drive or be driven by the planetary gears;
a sun gear (60) mounted to drive the planetary gears;
a second brake (100) for braking the sun gear (60) against rotation thereof; and
a shaft (40) connected to drive the sun gear (60);
an engine fan (45) coupled to the ring gear (50) and drivable thereby; and
**characterised in that** the first brake (100) is arranged to brake the planetary gear carrier (70) to cause the shaft (40) to drive the sun gear to drive the planetary gears to drive the ring gear (50) to drive the engine fan (45);
and the second brake is arranged to brake the sun gear (60) when the first brake (100) is released so as to cause the engine fan (45) to drive the ring gear (50) to drive the planetary gears (65) to drive the planetary gear carrier (70).

2. The fan drive of claim 1, further comprising a power component (95) driven by the planetary gear carrier (70).

3. The fan drive of claim 1 or 2, wherein the gearbox (35) is a differential gearbox.

4. An engine comprising a fan drive as claimed in claim 1, 2 or 3, the engine having a turbine coupled to said shaft (40).

5. A method for selectively disengaging components of a turbofan gas turbine engine in an emergency condition, said method comprising:
providing a gearbox (35) comprising:
a planetary gear carrier (70);
a first brake (100) for braking the planetary gear carrier against rotation thereof;
planetary gears (65) mounted in the planetary gear carrier;
a ring gear (50) mounted to drive or be driven by the planetary gears;
a sun gear (60) mounted to drive the planetary gears;
a second brake (100) for braking the sun gear (60) against rotation thereof; and
a shaft (40) connected to drive the sun gear (60);
coupling an engine fan (45) to the ring gear (50); and **characterised in that**
when the engine is operating, braking the planetary gear carrier (70) with the first brake (100) to allow the shaft (40) to drive the sun gear (60) to drive the ring gear (50) via the gearbox (35) to drive the engine fan (45),
and when the engine is not operating, releasing the braking of the planetary gear carrier (70) and braking the sun gear (60) with the second brake (55) to allow the engine fan (45) to drive the ring gear (50) to drive the planetary gear carrier (70).

6. The method of claim 5 further comprising;
driving a power component (95) by said planetary gear carrier (70) to extract power therefrom if said sun gear (60) is braked.

7. The method of claim 5 or 6, wherein the gearbox is a differential gearbox.

## Patentansprüche

1. Bläserantrieb für ein Luftfahrzeug, umfassend:
ein Getriebe (35) umfassend:
einen Planetenradträger (70);
eine erste Bremse (100) zum Bremsen des Planetenradträgers gegen eine Rotation desselben;
Planetenräder (65), die in dem Planetenradträger angebracht sind;
ein Hohlrad (50), das derart angebracht ist, dass es die Planetenräder antreibt oder von diesen angetrieben wird;
ein Sonnenrad (60), das derart angebracht ist, dass es die Planetenräder antreibt;
eine zweite Bremse (100) zum Bremsen des Sonnenrads (60) gegen eine Rotation desselben; und
eine Welle (40), die verbunden ist, um das Sonnenrad (60) anzutreiben;
einen Maschinenbläser (45), der mit dem Hohlrad (50) verbunden und von diesem antreibbar ist; und
**dadurch gekennzeichnet, dass** die erste Bremse (100) derart angeordnet ist, dass sie den Planetenradträger (70) bremst, um die Welle (40) das Sonnenrad antreiben zu lassen, um die Planetenräder anzutreiben, um das Hohlrad (50) anzutreiben, um den Maschinenbläser (45) anzutreiben; und dadurch, dass die zweite Bremse derart angeordnet ist, dass sie das Sonnenrad (60) bremst, wenn die erste Bremse (100) gelöst ist, um den Maschinenbläser (45) das Hohlrad (50) antreiben zu lassen, um die Planetenräder (65) anzutreiben, um den Planetenträger (70) anzutreiben.

2. Bläserantrieb nach Anspruch 1, des Weiteren umfassend eine von dem Planetenradträger (70) angetriebene Leistungskomponente (95).

3. Bläserantrieb nach Anspruch 1 oder 2, wobei das Getriebe (35) ein Differentialgetriebe ist.

4. Maschine umfassend einen Bläserantrieb nach Anspruch 1, 2 oder 3, wobei die Maschine eine mit der Welle (40) verbundene Turbine aufweist.

5. Verfahren zum selektiven Entkuppeln von Komponenten einer Turbobläser-Gasturbinenmaschine in einem Notfallzustand, wobei das Verfahren umfasst:
Bereitstellen eines Getriebes (35) umfassend:
einen Planetenradträger (70);
eine erste Bremse (100) zum Bremsen des Planetenradträgers gegen eine Rotation von diesem;
Planetenräder (65), die an den Planetenradträger angebracht sind;
ein Hohlrad (50), das derart angebracht ist, dass es die Planetenräder antreibt oder von diesen angetrieben wird;
ein Sonnenrad (60), das derart angebracht ist, dass es die Planetenräder antreibt;
eine zweite Bremse (100) zum Bremsen des Sonnenrads (60) gegen eine Rotation von diesem; und
eine Welle (40), die verbunden ist, um das Sonnenrad (60) anzutreiben;
Verbinden eines Maschinenbläsers (45) mit dem Hohlrad (50); und **gekennzeichnet durch**
wenn die Maschine in Betrieb ist, Bremsen des Planetenradträgers (70) mit der ersten Bremse (100), um es der Welle (40) zu erlauben, das Sonnenrad (60) anzutreiben, um über das Getriebe (35) das Hohlrad (50) anzutreiben, um den Maschinenbläser (45) anzutreiben,
und wenn die Maschine nicht in Betrieb ist, Lösen des Bremsens des Planetenradträgers (70) und Bremsen des Sonnenrads (60) mit der zweiten Bremse (55), um es dem Maschinenbläser (45) zu erlauben, das Hohlrad (50) anzutreiben, um den Planetenradträger (70) anzutreiben.

6. Verfahren nach Anspruch 5 des Weiteren umfassen;
Antreiben einer Leistungskomponente (95) durch den Planetenradträger (70), um Leistung abzunehmen wenn das Sonnenrad (60) gebremst ist.

7. Verfahren nach Anspruch 5 oder 6, wobei das Getriebe ein Differentialgetriebe ist.

## Revendications

1. Entraînement ventilateur pour aéronef, comprenant :
une boîte d'engrenages (35) comprenant :
un support d'engrenage planétaire (70) ;
un premier frein (100) pour freiner la rotation du support d'engrenage planétaire ;
des engrenages planétaires (65) montés dans le support d'engrenage planétaire ;
une couronne (50) montée pour entraîner ou être entraînée par les engrenages planétaires ;
une roue solaire (60) montée pour entraîner les engrenages planétaires ;
un second frein (100) pour freiner la rotation de la roue solaire (60) ; et
un arbre (40) raccordé pour entraîner la roue solaire (60) ;
un ventilateur de moteur (45) couplé à la couronne (50) et pouvant être entraîné par celle-ci ; et
**caractérisé en ce que** le premier frein (100) est agencé pour freiner le support d'engrenage planétaire (70) afin d'amener l'arbre (40) à entraîner la roue solaire pour entraîner les engrenages planétaires pour entraîner la couronne (50) pour entraîner le ventilateur de moteur (45) ;
et le second frein est agencé pour freiner la roue solaire (60) lorsque le premier frein (100) est libéré de façon à amener le ventilateur de moteur (45) à entraîner la couronne (50) pour entraîner les engrenages planétaires (65) pour entraîner le support d'engrenage planétaire (70).

2. Entraînement ventilateur selon la revendication 1, comprenant en outre un composant de puissance (95) entraîné par le support d'engrenage planétaire (70).

3. Entraînement ventilateur selon la revendication 1 ou 2, dans lequel la boîte d'engrenages (35) est une boîte d'engrenages différentielle.

4. Moteur comprenant un entraînement ventilateur selon la revendication 1, 2 ou 3, le moteur comportant une turbine couplée audit arbre (40).

5. Procédé de désengrènement sélectif de composants d'un moteur à turbine à gaz de turboréacteur à double flux dans une condition d'urgence, ledit procédé comprenant les étapes consistant à :
fournir une boîte d'engrenages (35) comprenant :
un support d'engrenage planétaire (70) ;
un premier frein (100) pour freiner la rotation du support d'engrenage planétaire ;
des engrenages planétaires (65) montés dans le support d'engrenage planétaire ;
une couronne (50) montée pour entraîner ou être entraînée par les engrenages planétaires ;
une roue solaire (60) montée pour entraîner les engrenages planétaires ;
un second frein (100) pour freiner la rotation de la roue solaire (60) ; et
un arbre (40) raccordé pour entraîner la roue solaire (60) ;
coupler un ventilateur de moteur (45) à la couronne (50) ; et **caractérisé en ce que**
lorsque le moteur fonctionne, freiner le support d'engrenage planétaire (70) avec le premier frein (100) pour permettre à l'arbre (40) d'entraîner la roue solaire (60) pour entraîner la couronne (50) via la boîte d'engrenages (35) pour entraîner le ventilateur de moteur (45),
et lorsque le moteur ne fonctionne pas, libérer le freinage du support d'engrenage planétaire (70) et freiner la roue solaire (60) avec le second frein (55) afin de permettre au ventilateur de moteur (45) d'entraîner la couronne (50) pour entraîner le support d'engrenage planétaire (70).

6. Procédé selon la revendication 5, comprenant en outre l'étape consistant à :
entraîner un composant de puissance (95) par ledit support d'engrenage planétaire (70) pour en extraire de la puissance si ladite roue solaire (60) est freinée.

7. Procédé selon la revendication 5 ou 6, dans lequel la boîte d'engrenages est une boîte d'engrenages différentielle.
